# EUROPEAN PATENT APPLICATION

(11) **EP 2 918 933 A1**
(43) Date of publication of application: **16.09.2015**
(21) Application number: 13842395.9
(22) Date of filing: 15.05.2013
(51) Int. Cl.: F24F 11/02

(54) **HEAT SOURCE SYSTEM CONTROL DEVICE**

(30) Priority: 26.09.2012 JP 2012212567
(71) Applicant: Daikin Industries, Ltd., Osaka 530-8323 (JP)
(72) Inventor: KONDO, Tetsuyuki, Osaka-shi, Osaka 530-8323 (JP); YAMAMORI, Haruyuki, Osaka-shi, Osaka 530-8323 (JP); KAWAMURA, Shunichi, Osaka-shi, Osaka 530-8323 (JP)
(74) Representative: Goddar, Heinz J.
(86) International application number: PCT/JP2013/063544
(87) International publication number: WO 2014/050200

(57) **Abstract**

There is provided a heat source system control device which performs control for improving efficiency such that the coefficient of performance for the entirety of a heat source system is optimized as part of the control of the heat source system which has a plurality of heat source units where the capacities and/or the load characteristics are different. A heat source system control device which controls a heat source system (100) and has a plurality of heat source units (50a, 50b, and 50c) where the capacities and/or the load characteristics are different, a first header (20) which aggregates hot/cold water which is supplied from the plurality of heat source units, and a header temperature sensor (60) which measures the temperature of the hot/cold water which is aggregated by the first header (20), is provided with a set temperature memory section (15a) storing a set temperature of the hot/cold water in the header, a header temperature detecting section (14) which detecting output values from the header temperature sensor, and a control section (16) performing a control for improving efficiency on the plurality of heat source units based on the respective capacities and/or load characteristics and bringing the temperature of the hot/cold water close to the set temperature.

## Description

### TECHNICAL FIELD

The present invention relates to a heat source system control device.

### BACKGROUND ART

In the prior art, an device which is shown in Patent Literature 1 (Japanese Unexamined Patent Application Publication No. 2005-114295) is known as an example of a heat source system control device which controls the number of heat source units included in a heat source system. The system according to Patent Literature 1 measures the temperature of the hot/cold water which is supplied to the heat source units and implements starting and stopping of operation of each of the heat source units, controlling of the loads of compressors in each of the heat source units, and controlling of a flow amount of the hot/cold water in each of the heat source units so as to maximize a coefficient of performance (COP) over the entirety of the heat source system based on the measured temperatures. In the heat source system according to Patent Literature 1, the plurality of heat source units controlled by the heat source system control device includes both the heat source units where it is possible to control the loads of the compressors and the heat source units where it is not possible to control the loads of the compressor. In addition, each of the heat source units where it is possible to control the loads of the compressors has the same capacity and load characteristic with each other. The heat source system control device according to Patent Literature 1 performs control of the compressors of each of the heat source units such that the coefficient of performance over the entirety of the heat source system is maximized with regard to the plurality of heat source units which have the same capacity and load characteristic.

### SUMMARY OF THE INVENTION

### <Technical Problems>

Some heat source systems have a plurality of heat source units where the capacities and/or the load characteristics are different. As a method for controlling a heat source system which has a plurality of heat source units where the capacities and/or the load characteristics are different, there is a method where the heat source system control device preferentially drives the heat source units with good efficiency and stops driving of the heat source units with poor efficiency according to the load over the entirety of the system. In this method for controlling, it is not necessarily the case that setting of the loads of the heat source units which are preferentially driven is the optimal coefficient of performance for all of the heat source units. As such, there is a possibility that the coefficient of performance for the entirety of the heat source system is not optimized so as to be maximized.

The present invention is carried out in consideration of the points described above and the problem of the present invention is to provide a heat source system control device which performs control for improving efficiency such that the coefficient of performance for the entirety of the heat source system is optimized as part of the control of the heat source system which has a plurality of heat source units where the capacities and/or the load characteristics are different.

### <Solution to Problem>

A heat source system control device according to a first aspect of the present invention is a heat source system control device controlling a heat source system and is provided with a set temperature memory section, a header temperature detecting section, and a control section. The heat source system has heat source units, a header, and a header temperature sensor. The heat source units include a plurality of heat source units where the capacities and/or load characteristics are different. The header aggregates hot/cold water which is supplied from the plurality of heat source units. The header temperature sensor measures the temperature of the hot/cold water which is aggregated by the header. The set temperature memory section stores a set temperature of the hot/cold water in the header. The header temperature detecting section detects output values from the header temperature sensor. The control section performs a control for improving efficiency on the plurality of heat source units based on the respective capacities and/or load characteristics and brings the temperature of the hot/cold water close to the set temperature.

In the heat source system control device, the control section controls the heat source units such that the temperature of the hot/cold water which is aggregated by the header becomes the set temperature of the hot/cold water stored in the set temperature memory section. At this time, the heat source system control device performs the control for improving efficiency such that operating efficiency of the heat source units over the entirety of the heat source system is maximized based on the capacities and/or the load characteristics of the respective heat source units.

As a result, it is possible to maximize the coefficient of performance over the entirety of the heat source system in the heat source system which has the plurality of heat source units where the capacities and/or the load characteristics are different.

Here, the "coefficient of performance (COP)" is represented by cooling capacity (kW) per 1 kW of power consumption. In addition, "load" is energy which is actually consumed by the heat source unit. In a case where the heat source unit has an inverter type compressor, the load of the heat source unit is a number which is equivalent to a step of the compressor (a step equivalent number).

A heat source system control device according to a second aspect of the present invention is the heat source system control device according to the first aspect of the present invention, where the control section performs at least one of an individual control of driving and stopping of each of the plurality of heat source units and an individual control of the load of each of the plurality of heat source units.

This heat source system control device controls the loads of the heat source units individually. The individual control of the load for each of the heat source units includes driving and stopping of each of the heat source units. It is thereby possible to flexibly perform the control for improving efficiency over the entirety of the heat source system which has the plurality of heat source units where the capacities and/or the load characteristics are different.

A heat source system control device according to a third aspect of the present invention is the heat source system control device according to the first aspect or the second aspect of the present invention which is further provided with a coefficient of performance memory section. The coefficient of performance memory section stores information, which relates to a coefficient of performance according to the load of each of the plurality of heat source units, as coefficient of performance information. The control section references the coefficient of performance information stored in the coefficient of performance memory section and drives each of the plurality of heat source units with the load where the coefficient of performance is high.

In the heat source system control device, the control section drives each of the heat source units with the load with the high coefficient of performance based on information which relates to the coefficient of performance of each of the heat source units with regard to the heat source system which has a plurality of heat source units where the capacities and/or the load characteristics are different. As such, it is possible to easily and reliably perform the control for improving efficiency such that the coefficient of performance over the entirety of the heat source system is maximized.

A heat source system control device according to a fourth aspect of the present invention is the heat source system control device according to any of the first aspect to the third aspect of the present invention which is further provided with a rated capacity memory section. The rated capacity memory section stores information, which relates to a rated capacity of each of the plurality of heat source units, as rated capacity information. The control section determines the heat source units which are driven or stopped based on the rated capacity information stored in the rated capacity memory section.

In the heat source system control device, the heat source units which are driven or stopped are selected based on the rated capacity information of the respective heat source units in the heat source system which has a plurality of heat source units where the capacities and/or the load characteristics are different. Due to this, it is possible to perform the control for improving efficiency such that the efficiency is maximized with regard to the total energy consumption over the entirety of the heat source system.

A heat source system control device according to a fifth aspect of the present invention is the heat source system control device according to any of the first aspect to the fourth aspect of the present invention, where the heat source system further has a plurality of pumps. The plurality of pumps supply the hot/cold water to each of the plurality of heat source units. The control section adjusts the temperature of the hot/cold water which is aggregated by the header by controlling a flow amount of the hot/cold water supplied from the plurality of pumps.

In the heat source system control device, the control for improving efficiency is performed on the loads of the respective heat source units and the flow amount of the hot/cold water which is supplied to the respective heat source units based on the temperature of the hot/cold water which is aggregated by the header. Due to this, it is possible to bring the efficiency of the total energy consumption over the entirety of the heat source system close to the maximum more easily in the heat source system which has a plurality of heat source units where the capacities and/or the load characteristics are different.

A heat source system control device according to a sixth aspect of the present invention is the heat source system control device according to the fifth aspect of the present invention, where the heat source system further has a plurality of outlet temperature sensors. The plurality of outlet temperature sensors are arranged in the vicinity of respective outlets of the plurality of heat source units. The plurality of outlet temperature sensors measure outlet temperatures which are the temperatures of the hot/cold water which is supplied to the header. The heat source system control device is further provided with an outlet temperature detecting section. The outlet temperature detecting section detects output values from the plurality of outlet temperature sensors. The control section adjusts the temperature of the hot/cold water in the header by controlling the load of each of the plurality of heat source units and the flow amount of the hot/cold water which is supplied from the plurality of pumps based on the outlet temperatures of each of the plurality of heat source units and the flow amount of the hot/cold water which is supplied from each of the plurality of heat source units.

In the heat source system control device, the control section detects the outlet temperature of the hot/cold water from each of the heat source units using the outlet temperature detecting section. In addition, the control section controls the flow amount of the hot/cold water from each of the heat source units. The control section controls the load and the flow amount of the hot/cold water in each of the heat source units based on the outlet temperature and flow amount of the hot/cold water from each of the heat source units. Due to this, it is possible to more easily and reliably control the temperature and the flow amount of the hot/cold water in the header.

### <Advantageous Effects of Invention>

In the heat source system control device according to the first aspect, it is possible to maximize the coefficient of performance over the entirety of the heat source system which has the plurality of heat source units where the capacities and/or the load characteristics are different.

In the heat source system control device according to the second aspect, it is possible to flexibly perform the control for improving efficiency over the entirety of the heat source system which has the plurality of heat source units where the capacities and/or the load characteristics are different.

In the heat source system control device according to the third aspect, it is possible to more easily and reliably perform the control for improving efficiency so as to maximize the coefficient of performance over the entirety of the heat source system with regard to the total energy consumption over the entirety of the heat source system and the efficiency with regard to the total energy consumption, based on information which relates to the coefficient of performance of each of the heat source units with regard to the heat source system which has the plurality of heat source units where the capacities and/or the load characteristics are different.

In the heat source system control device according to the fourth aspect, the heat source units which are driven or stopped are selected based on the rated capacity information on the respective heat source units in the heat source system which has the plurality of heat source units where the capacities and/or the load characteristics are different. Due to this, it is possible to perform the control for improving efficiency such that the efficiency is maximized with regard to the total energy consumption over the entirety of the heat source system.

In the heat source system control device according to the fifth aspect, it is possible to more easily perform the control for improving efficiency so that the efficiency of the total energy consumption over the entirety of the heat source system approaches to the maximum in the heat source system which has the plurality of heat source units where the capacities and/or the load characteristics are different.

In the heat source system control device according to the sixth aspect, it is possible to more easily and reliably control the temperature and the flow amount of the hot/cold water in the header.

### BRIEF DESCRIPTION OF THE DRAWINGS

[Fig. 1] Fig. 1 is a schematic configuration diagram of an energy management system according to an embodiment of the present invention.
[Fig. 2] Fig. 2 is a schematic configuration diagram of a heat source system control device.
[Fig. 3] Fig. 3(a) is a graph expressing the relationship between the load and the coefficient of performance of a heat source unit. Fig. 3(b) is a graph expressing the relationship between the load and the coefficient of performance of a heat source unit which is different to the heat source unit in Fig. 3(a).
[Fig. 4] Fig. 4 is a table of load and coefficient of performance.
[Fig. 5] Fig. 5 is a table of rated capacity of heat source unit.
[Fig. 6] Fig. 6 is a flow, diagram illustrating the flow of a process in a heat source system control device.
[Fig. 7] Fig. 7 is a flow diagram illustrating the flow of a process in a heat source system control device according to the modified example A.
[Fig. 8] Fig. 8 is a schematic configuration diagram of an energy management system according to modified example B.
[Fig. 9] Fig. 9 is a schematic configuration diagram of a heat source system control device according to modified example B.
[Fig. 10] Fig. 10 is a flow diagram illustrating the flow of a process in a heat source system control device according to modified example B.

### DESCRIPTION OF EMBODIMENTS

An energy management system 200 which includes a heat source system control device 10 according to the present invention will be described below with reference to the drawings.

### (1) Energy Management System

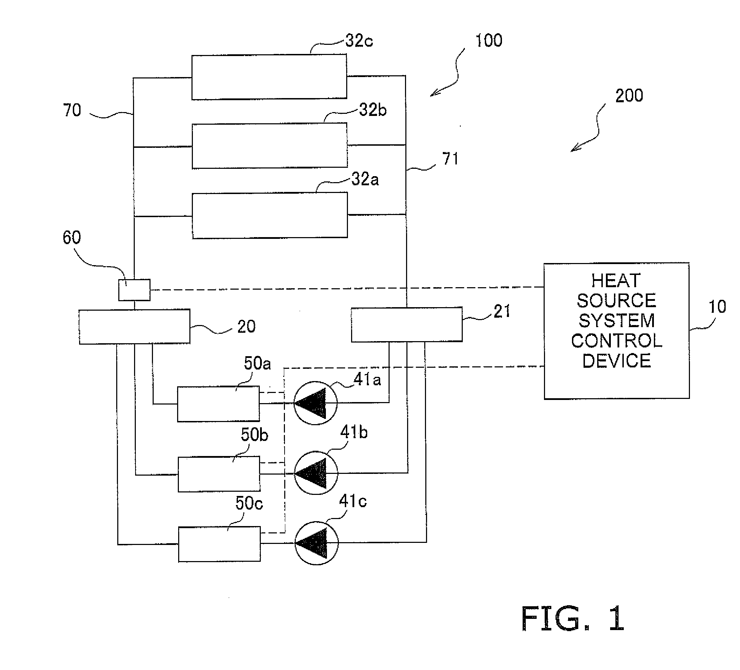

Fig. 1 illustrates the energy management system 200. The energy management system 200 is a system which manages energy consumed in a building.

The energy management system 200 includes a heat source system 100 and the heat source system control device 10. The energy management system 200 manages energy which is consumed in a building by controlling heat source units 50a, 50b, and 50c, which are included in the heat source system 100, using the heat source system control device 10. The configuration of the heat source system 100 and the heat source system control device 10 will be described below.

### (1-1) Heat Source System

The heat source system 100 has a plurality of heat source units 50a, 50b, and 50c, air conditioners 32a, 32b, and 32c, primary pumps 41 a, 41b, and 41 c, and a first header (a header) 20, a second header 21, and a header temperature sensor 60. Each of the plurality of heat source units 50a, 50b, and 50c has different capacity and/or different load characteristic. The heat source units 50a, 50b, and 50c are inverter type heat source units. The heat source units 50a, 50b, and 50c are, for example, air cooled inverter chillers or air cooled screw chillers. The primary pumps 41a, 41b, and 41c send hot/cold water to the heat source units 50a, 50b, and 50c with a certain flow amount. Hot/cold water sent from the heat source units 50a, 50b, and 50c is aggregated by the first header 20. Water which is returned from the air conditioners 32a, 32b, and 32c is aggregated by the second header 21.

Specifically, hot/cold water is sent to the heat source units 50a, 50b, and 50c using the primary pumps 41a, 41b, and 41c in the heat source system 100. Hot/cold water which is sent out from the heat source units 50a, 50b, and 50c is aggregated by the first header 20. The water aggregated by the first header 20 is sent to the air conditioners 32a, 32b, and 32c through an upstream side pipe 70. The header temperature sensor 60 is provided at a portion of the first header 20 where hot/cold water is aggregated. The header temperature sensor 60 measures the temperature of the hot/cold water. Hot/cold water aggregated by the first header 20 exchanges heat with indoor air in the air conditioners 32a, 32b, and 32c. Hot/cold water sent from the air conditioners 32a, 32b, and 32c is aggregated by the second header 21 through a downstream side pipe 71. Hot/cold water aggregated by the second header 21 is sent to the primary pumps 41a, 41b, and 41c. In Fig. 1, three heat source units and three air conditioners are described as being in the heat source system 100, but the number of heat source units and air conditioners is not limited to three.

### (1-2) Heat Source System Control Device

The heat source system control device 10 controls the heat source units 50a, 50b, and 50c which are included in the heat source system 100 as described above. The heat source system control device 10 is connected to the header temperature sensor 60 using a communication line. The heat source system control device 10 detects an output value from the header temperature sensor 60 via the communication line. In addition, the heat source system control device 10 controls the load of each of the heat source units 50a, 50b, and 50c via, for example, a communication network such as a LAN.

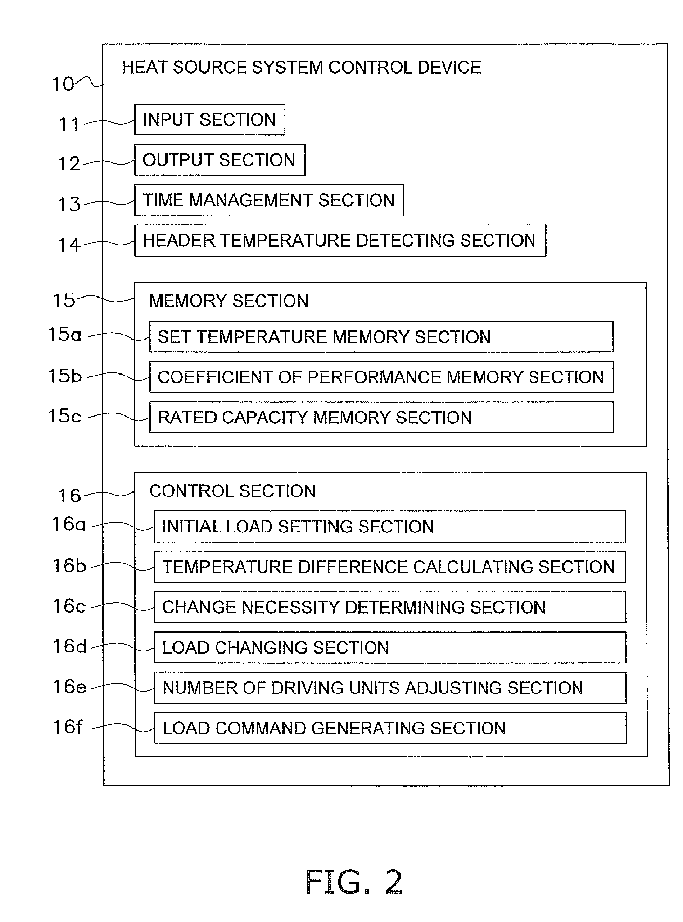

Fig. 2 is a schematic configuration diagram of the heat source system control device 10. The heat source system control device 10 will be described below using Fig. 2. As shown in Fig. 2, the heat source system control device 10 mainly has an input section 11, an output section 12, a time management section 13, a header temperature detecting section 14, a memory section 15, and a control section 16.

### (1-2-1) Input Section

The input section 11 is mainly configured from an operation button, a keyboard, a mouse, and the like. The input section 11 receives from a user a set temperature of hot/cold water which is aggregated by the first header 20. The set temperature which is received by the input section 11 is stored in a set temperature memory section 15a described later.

### (1-2-2) Output Section

The output section 12 is mainly configured from a display. A management screen, which shows various types of information which are stored in the memory section 15 described later, is displayed on the output section 12. In addition, the output section 12 sends control commands for an initial load described later and for an adjustment load described later, which are generated by a load command generating section 16f described later, to each of the heat source units 50a, 50b, and 50c.

### (1-2-3) Time Management Section

The time management section 13 performs time management for various types of control which are executed by the heat source system control device 10.

### (1-2-4) Header Temperature Detecting Section

The header temperature detecting section 14 detects output values from the header temperature sensor 60.

### (1-2-5) Memory Section

The memory section 15 is configured from a hard disk or the like and has the set temperature memory section 15a, a coefficient of performance memory section 15b, and a rated capacity memory section 15c.

Here, the "coefficient of performance" is represented by cooling capacity (kW) per 1 kW of power consumption. In addition, "load" is energy which is actually consumed by the heat source unit. In a case where the heat source unit has an inverter type of compressor, the load of the heat source unit is a numbers which is equivalent to a step of the compressor (a step equivalent number).

### (1-2-5-1) Set Temperature Memory Section

The set temperature memory section 15a stores the set temperature of hot/cold water in the first header 20 which the input section 11 receives from a user.

### (1-2-5-2) Coefficient of Performance Memory Section

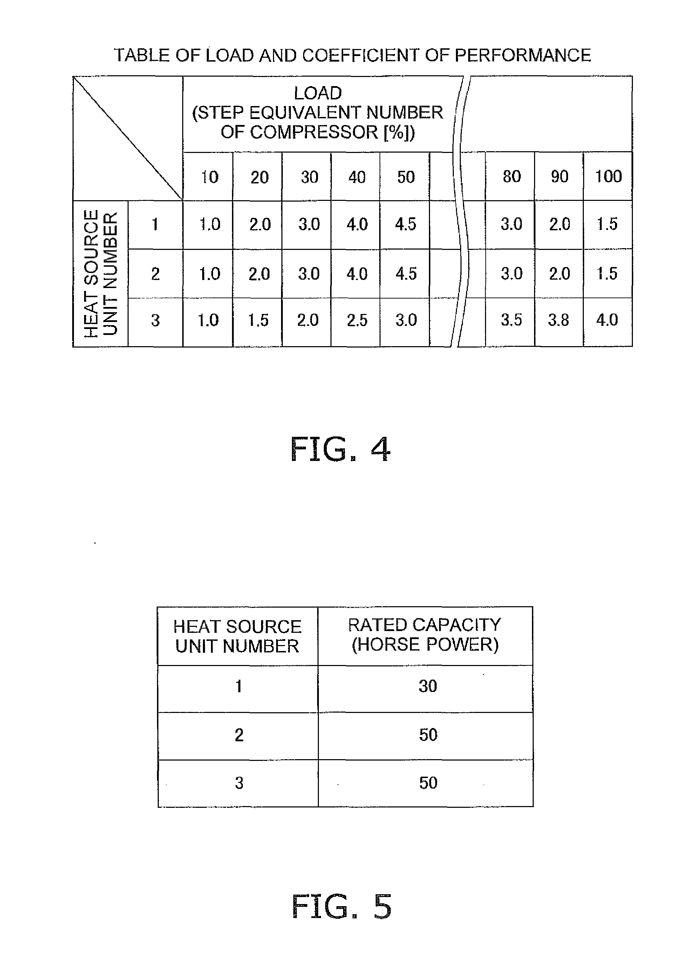

The coefficient of performance memory section 15b stores information, which relates to the coefficient of performance according to the load, for each of the heat source units 50a, 50b, and 50c. Specifically, the coefficient of performance memory section 15b stores a table of load and coefficient of performance (refer to Fig. 4). The table of load and coefficient of performance is a table which shows the coefficient of performance according to the loads of each of the heat source units 50a, 50b, and 50c. In detail, as shown in Fig. 4, heat source unit number which correspond to each of the heat source units 50a, 50b, and 50c and the coefficient of performance which corresponds to the loads of each of the heat source units 50a, 50b, and 50c are associated in the table of load and coefficient of performance. In other words, the table of load and coefficient of performance defines the coefficient of performance in a case where each of the heat source units 50a, 50b, and 50c is operated at predetermined loads (10 to 100).

### (1-2-5-3) Rated Capacity Memory Section

The rated capacity memory section 15c stores rated capacity information with regard to the heat source units 50a, 50b, and 50c (refer to Fig. 5). Specifically, a table of rated capacity such as shown in Fig. 5 is stored in the rated capacity memory section 15c. In the table of rated capacity, the heat source unit number which corresponds to each of the heat source units 50a, 50b, and 50c and the rated capacity for each of the heat source units 50a, 50b, and 50c are associated.

### (1-2-6) Control Section

The control section 16 is configured from a CPU, a ROM, a RAM, and the like. The control section 16 reads out and executes a program which is stored in the memory section 15 described above. The control section 16 performs a control for improving efficiency based on the capacities and/or the load characteristics of the respective heat source units 50a, 50b, and 50c by executing the program. Here, the control for improving efficiency is a control for maintaining a high coefficient of performance for the entirety of the heat source system 100. Specifically, the coefficient of performance over the entirety of the heat source system 100 is increased in the control for improving efficiency by performing a number of driving units adjusting process and an adjustment load setting process which will be described later.

In order to execute the control for improving efficiency, the control section 16 mainly functions as an initial load setting section 16a, a temperature difference calculating section 16b, a change necessity determining section 16c, a load changing section 16d, a number of driving units adjusting section 16e, and a load command generating section 16f.

### (1-2-6-1)

The initial load setting section 16a sets an initial load with regard to each of the heat source units 50a, 50b, and 50c (an initial load setting process). The initial load is a load which is initially set with regard to each of the heat source units 50a, 50b, and 50c and is the load with the optimal coefficient of performance. In detail, the initial load setting section 16a sets the load which indicates the optimal coefficient of performance with regard to each of the heat source units 50a, 50b, and 50c based on the table of load and coefficient of performance which is stored in the coefficient of performance memory section 15b.

### (1-2-6-2)

The temperature difference calculating section 16b calculates the temperature difference between the temperature of the hot/cold water inside the first header 20 and a set temperature (a temperature difference calculation process). The temperature difference calculating section 16b calculates the temperature difference by comparing an output value which is detected by the header temperature detecting section 14 and the set temperature which is stored in the set temperature memory section 15a. In detail, the temperature difference calculating section 16b calculates the temperature difference by subtracting the set temperature which is stored in the set temperature memory section 15a from the temperature (actual measurement temperature) of the hot/cold water in the first header 20. The temperature difference which is calculated by the temperature difference calculating section 16b is stored in the memory section 15 described above.

The change necessity determining section 16c determines the necessity for changing the load at a predetermined timing (an adjustment necessity determining process). Here, the predetermined timing is after the temperature difference calculation process is performed or the like. In detail, the change necessity determining section 16c determines the necessity for changing the load based on the temperature difference which is calculated by the temperature difference calculating section 16b. The change necessity determining section 16c determines the necessity for changing the initial load in a case where the initial load is set with regard to each of the heat source units 50a, 50b, and 50c. On the other hand, the change necessity determining section 16c determines the necessity for changing the adjustment load in a case where the adjustment load is set with regard to each of the heat source units 50a, 50b, and 50c. The initial load is the load with the optimal coefficient of performance which is initially set with regard to each of the heat source units 50a, 50b, and 50c as described above. In addition, the adjustment load is a load which is set by the load changing section 16d described later and is a load which is set by adjusting an initial setting.

### (1-2-6-3)

The change necessity determining section 16c determines that it is not necessary to change the initial load in a case where the temperature difference between the actual measurement temperature and the set temperature is included in a predetermined range. On the other hand, the change necessity determining section 16c determines that it is necessary to change the initial load or the adjustment load in a case where the temperature difference between the actual measurement temperature and the set temperature is outside of the predetermined range.

In a case where it is determined that changing of the load is necessary, the change necessity determining section 16c determines whether the temperature difference is a positive value or a negative value. In a case where the temperature difference is a positive value, the actual measurement temperature is higher than the set temperature. On the other hand, in a case where the temperature difference is a negative value, the actual measurement temperature is lower than the set temperature. The change necessity determining section 16c determines that changing of the load in the positive direction is necessary (increment of the load is necessary) in a case where the temperature difference is a positive value. In addition, the change necessity determining section 16c determines that changing of the load in the negative direction is necessary (reduction of the load is necessary) in a case where the temperature difference is a negative value.

### (1-2-6-4)

The load changing section 16d changes the load which is set with regard to each of the heat source units 50a, 50b, and 50c. In other words, the load changing section 16d sets the adjustment load (an adjustment load setting process). The load changing section 16d sets the adjustment load with regard to each of the heat source units 50a, 50b, and 50c when the change necessity determining section 16c described above determines that changing of the initial load is necessary. In addition, the load changing section 16d sets a new adjustment load for each of the heat source units 50a, 50b, and 50c in a case where it is determined that changing of the adjustment load is necessary. Here, the adjustment load is a load for each of the heat source units 50a, 50b, and 50c which is adjusted based on the temperature difference which is calculated by the temperature difference calculating section 16b. In other words, the adjustment load is a load which is adjusted in order to bring the temperature of the hot/cold water in the first header 20 close to the set temperature. In addition, the new adjustment load is an adjustment load which is newly set based on the temperature difference after the adjustment load is set.

The load changing section 16d selects the load where each of the heat source units 50a, 50b, and 50c is controlled from a range of loads which has a high coefficient of performance. Specifically, the load changing section 16d determines the load which has a high coefficient of performance with regard to each of the heat source units 50a, 50b, and 50c based on the table of load and coefficient of performance which is stored in the coefficient of performance memory section 15b.

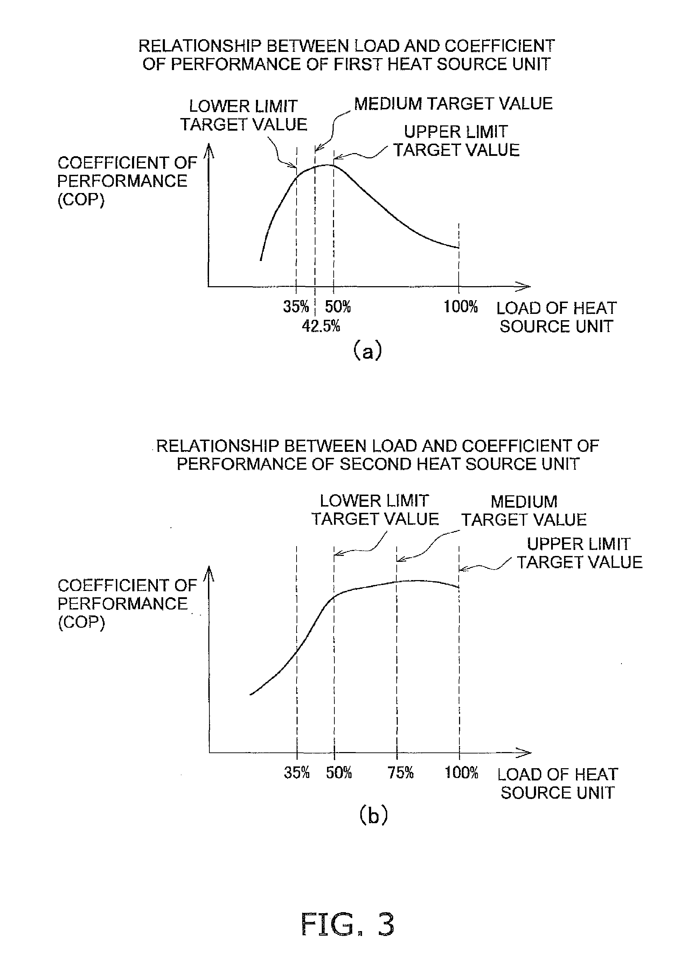

The adjustment load determining process by the load changing section 16d will be described in detail using Fig. 3(a) and 3(b).

Fig. 3 (a) and 3(b) respectively illustrate a relationship between the load and the coefficient of performance of the first heat source unit 50a and a relationship between the load and the coefficient of performance of the second heat source unit 50b. In detail, in Fig. 3(a) and 3(b), the horizontal axis expresses the loads of the heat source units 50a and 50b and the vertical axis expresses the coefficient of performance of the heat source units 50a and 50b. That is, curved lines which are shown in Fig. 3(a) and 3(b) express the coefficient of performance which changes according to the loads of the heat source units 50a and 50b.

The loads of the first heat source unit 50a and the second heat source unit 50b indicate step equivalent numbers of the compressors. That is, the step equivalent number is increased or decreased in order to increase or decrease the load. The first heat source unit 50a has capacity and load characteristic which are different from those of the second heat source unit 50b.

As shown in Fig. 3(a), the coefficient of performance in the first heat source unit 50a shows values which are close to the maximum when the loads are in a range of 35% to 50%. The control section 16 sets a lower limit value (35%) as a lower limit target value in a range of the loads in which the coefficient of performance is close to the maximum. In the same manner, the control section 16 sets an upper limit value (50%) as an upper limit target value in the range of the loads in which the coefficient of performance is close to the maximum. Furthermore, the control section 16 sets a middle value (42.5%) as a medium target value in the range of the loads in which the coefficient of performance is close to the maximum. The control section 16 controls the first heat source unit 50a at any one stage out of the three stages of load of the lower limit target value, the medium target value, or the upper limit target value.

In detail, the load is set to 42.5% in a case of reducing the energy consumption of the first heat source unit 50a when the initial load of the first heat source unit 50a is 50%. Furthermore, the control section 16 reduces the target value of the load by one stage at a time when the energy consumption of the first heat source unit 50a is reduced. On the other hand, the load is changed to 42.5% in a case of increasing the energy consumption of the first heat source unit 50a when the initial setting of the first heat source unit 50a is 35%. That is, the control section 16 increases the energy consumption by raising the target value of the load by one stage at a time.

On the other hand, as shown in Fig. 3(b), the coefficient of performance in the second heat source unit 50b shows values which are close to the maximum when the loads are in a range of 50% to 100%. The control section 16 sets a lower limit value (50%) as a lower limit target value in a range of the loads in which the coefficient of performance is close to the maximum. In the same manner, the control section 16 sets an upper limit value (100%) as an upper limit target value in the range of the loads in which the coefficient of performance is close to the maximum. Furthermore, the control section 16 sets a middle value (75%) as a medium target value in the range of the loads in which the coefficient of performance is close to the maximum. The control section 16 controls the second heat source unit 50b at any one stage out of the three stages of load of the lower limit target value, the medium target value, and the upper limit target value.

In detail, the load is set to 75% in a case of reducing the energy consumption of the second heat source unit 50b when the initial load of the second heat source unit 50b is 100%. Furthermore, the control section 16 reduces the target value of the load by one stage at a time when the energy consumption of the second heat source unit 50b is reduced. On the other hand, the load is changed to 75% in a case of increasing the energy consumption of the second heat source unit 50b when the initial setting of the second heat source unit 50b is 50%. That is, the control section 16 increases the energy consumption by raising the target value of the load by one stage at a time.

### (1-2-6-5)

The number of driving units adjusting section 16e adjusts the number of the driving heat source units (the number of driving units adjusting process). Specifically, in a case where it is determined that changing of the initial load or the adjustment load is necessary by the change necessity determining section 16c but it is not possible to change the adjustment load, the number of driving units adjusting section 16e adjusts the number of the driving heat source units 50a, 50b, and 50c. In detail, the number of driving units adjusting section 16e increases the number of the driving heat source units in a case where the step equivalent numbers of the compressors of all of the heat source units 50a, 50b, and 50c which are driven is the upper limit target value and the change necessity determining section 16c determines that increment of the load is necessary. In addition, the number of driving units adjusting section 16e reduces the number of the driving heat source units 50a, 50b, and 50c in a case where the step equivalent numbers of all of the compressors which are driven is the lower limit target value and the change necessity determining section 16c determines that reduction of the load is necessary.

The number of driving units adjusting section 16e compares the rated capacities of the respective heat source units 50a, 50b, and 50c (a rated capacity comparison process) and determines the heat source units 50a, 50b, and 50c which are to be driven and the heat source units 50a, 50b, and 50c which are to be stopped. For example, in a case where the first heat source unit 50a of the rated capacity of 30 horsepower and the second heat source unit 50b of the rated capacity of 50 horsepower shown in the table in Fig. 5 are not driven and the number of the driving heat source units is to be increased as a result of the number of driving units adjusting process, the first heat source unit 50a of the smaller rated capacity is driven. This is to avoid a rapid change of output from the heat source units 50a, 50b, and 50c in the heat source system 100.

### (1-2-6-6)

The load command generating section 16f generates control commands based on the adjustment load with regard to each of the heat source units 50a, 50b, and 50c. In detail, when the adjustment load is set by the load changing section 16d, the load command generating section 16f sends the control commands each of the heat source units 50a, 50b, and 50c via the output section 12.

### (2) Control Process Performed by Heat Source System Control Device

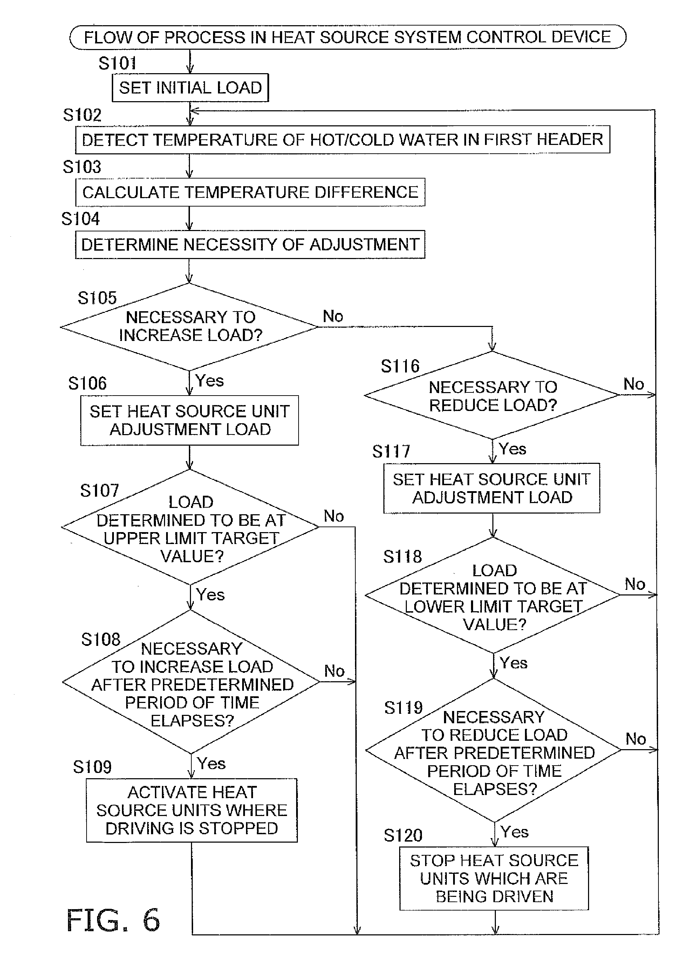

The flow of a process for controlling the heat source system in the heat source system control device 10 will be described below using Fig. 6.

First, the initial load setting section 16a performs the initial load setting process in step S101. The number of the driving heat source units 50a, 50b, and 50c is set to two being close to half of the number of units of the heat source units, since the heat source system 100 has three heat source units 50a, 50b, and 50c.

In step S102, the header temperature detecting section 14 measures the actual measurement temperature. The header temperature detecting section 14 detects output value from the header temperature sensor 60 and stores the value in the memory section 15.

In step S103, the temperature difference calculating section 16b performs the temperature difference calculation process. The control section 16 stores the temperature difference, which is calculated, in the memory section 15.

In step S104, the change necessity determining section 16c performs the adjustment necessity determining process. The change necessity determining section 16c performs determining of whether increment of the load is necessary or whether reduction of the load is necessary in a case where there is a temperature difference as a result of the temperature difference calculation process.

In step S105, the process transitions to step S106 in a case where it is determined that the above mentioned increment of the load is necessary. In other cases, the process transitions to step S116.

In step S106, the load changing section 16d performs the adjustment load setting process so as to increase the loads of the heat source units 50a and 50b which are currently being driven based on the information on temperature differences stored in the memory section 15 and the table of load and coefficient of performance stored in the coefficient of performance memory section 15b. In detail, the loads of the heat source units 50a and 50b are increased by raising the step numbers of the compressors. In addition, it is possible to implement the control for improving efficiency where a high coefficient of performance is maintained over the entirety of the heat source system 100 by controlling the heat source units 50a and 50b in a range where the coefficient of performance of each of the heat source units 50a and 50b is high as shown in Fig. 3. In detail, the control section 16 controls the load of each of the heat source units 50a and 50b in three stages of the lower limit target value, the medium target value, and the upper limit target value. The control section 16 determines the heat source units 50a and 50b where the loads are to be increased and the target values of the loads out of the three stages for the heat source units 50a and 50b based on the temperature difference stored in the memory section 15 and the table of load and coefficient of performance stored in the coefficient of performance memory section 15b.

The load command generating section 16f generates control commands based on the adjustment loads with regard to the heat source units 50a and 50b.

The output section 12 sends the control commands generated by the load command generating section 16f to the heat source units 50a and 50b.

In step S107, the control section 16 determines whether the loads of all of the driving heat source units 50a and 50b are the upper limit target values. In a case where the loads of all of the heat source units 50a and 50b are not the upper limit target values, an upper limit flag is stored as OFF in the memory section 15 and the process returns to step S102. In a case where the loads of all of the heat source units 50a and 50b are the upper limit target values, the upper limit flag is stored as ON in the memory section 15 and the process transitions to step S108.

In step S108, the time management section 13 starts measuring time for a predetermined waiting time of, for example, five minutes or the like. The temperature difference calculating section 16b performs the temperature difference calculation process after the predetermined waiting time elapses. After this, the change necessity determining section 16c performs the adjustment necessity determining process. Here, in a case where the upper limit flag which is in the memory section 15 is ON and it is determined that increment of the load is necessary in the adjustment necessity determining process, the process transitions to step S109. In other cases, the process returns to step S102.

In step S109, the number of driving units adjusting section 16e performs the number of driving units adjusting process and determines the number of the heat source units which are to be driven. After this, the number of driving units adjusting section 16e performs the rated capacity comparison process and determines the heat source units which are newly to be driven. Here, since the only heat source unit where driving is currently stopped is the third heat source unit 50c, driving of the third heat source unit 50c is started. The load of the third heat source unit 50c where driving is started is the lower limit target value. The lower limit target value is chosen so as not to change the output of the heat source units 50a, 50b, and 50c rapidly in the heat source system 100. A control command is generated by the load command generating section 16f and is sent to the third heat source unit 50c via the output section 12. Driving of the third heat source unit 50c is started and the process returns to step S102.

In step S 116, the process transitions to step S117 in a case where it is determined that the reduction of the load is necessary in step S104. In a case where it is determined that it is not necessary to increase the load and it is not necessary to reduce the load, the process transitions to step S102.

In step S117, the load changing section 16d performs the adjustment load setting process so as to reduce the loads of the heat source units 50a and 50b which are currently being driven based on the information on temperature differences stored in the memory section 15 and the table of load and coefficient of performance stored in the coefficient of performance memory section 15b. In detail, the loads of the heat source units 50a and 50b are reduced by lowering the step numbers of the compressors. In addition, it is possible to implement the control for improving efficiency where a high coefficient of performance is maintained over the entirety of the heat source system 100 by controlling the heat source units 50a and 50b in a range where the coefficient of performance of each of the heat source units 50a and 50b is high as shown in Fig. 3. In detail, the control section 16 controls the load of each of the heat source units 50a and 50b in three stages of the lower limit target value, the medium target value, and the upper limit target value. The control section 16 determines the heat source units 50a and 50b where the loads are to be reduced and the target values of the loads out of the three stages for the heat source units 50a and 50b based on temperature differences stored in the memory section 15 and the table of load and coefficient of performance stored in the coefficient of performance memory section 15b.

The load command generating section 16f generates control commands based on the adjustment loads with regard to the heat source units 50a and 50b.

The output section 12 sends the control commands generated by the load command generating section 16f to the heat source units 50a and 50b.

In step S118, the control section 16 determines whether the loads of all of the driving heat source units 50a and 50b are the lower limit target values. In a case where the loads of all of the heat source units 50a and 50b which are currently being driven are not the lower limit target values, a lower limit flag is stored as OFF in the memory section 15 and the process returns to step S102. In a case where the loads of all of the heat source units 50a and 50b are the lower limit target values, the lower limit flag is stored as ON in the memory section 15 and the process transitions to step S 119.

In step S 119, the time management section 13 starts measuring time for a predetermined waiting time of, for example, five minutes or the like. The temperature difference calculating section 16b performs the temperature difference calculation process after the predetermined waiting time elapses. After this, the change necessity determining section 16c performs the adjustment necessity determining process. Here, in a case where the lower limit flag which is in the memory section 15 is ON and it is determined that reduction of the load is necessary in the adjustment necessity determining process, the process transitions to step S120. In other cases, the process returns to step S102.

In step S120, the number of driving units adjusting section 16e performs the number of driving units adjusting process and determines the number of units of the heat source units which are to be driven. After this, the driving units adjusting section 16e performs the rated capacity comparison process and determines the heat source units which are to be stopped. Here, the heat source units which are being driven are the first heat source unit 50a and the second heat source unit 50b, and driving of the first heat source unit 50a is stopped since the rated capacity of the first heat source unit 50a is smaller when the rated capacities of the respective heat source units 50a and 50b, shown in Fig. 5, are compared. A control command is generated by the load command generating section 16f and is sent to the first heat source unit 50a via the output section 12. The first heat source unit 50a is stopped and the process returns to step S102.

### (3) Characteristics

### (3-1)

In the heat source system control device according to the present embodiment, the control section 16 controls the heat source units 50a, 50b, and 50c such that the temperature of the hot/cold water inside the first header 20, which is detected by the header temperature detecting section 14, becomes the set temperature of the hot/cold water which is stored in the set temperature memory section 15a. At this time, the control for improving efficiency is performed based on the respective capacities and load characteristics of the heat source units 50a, 50b, and 50c such that the coefficient of performance of each of the heat source units 50a, 50b, and 50c is maximized.

As a result, it is possible to maximize the coefficient of performance over the entirety of the heat source system 100 which has the plurality of heat source units 50a, 50b, and 50c where the capacities and/or the load characteristics are different.

### (3-2)

In the present embodiment, the control section 16 controls the heat source units 50a, 50b, and 50c of the heat source system 100 with the loads of the lower limit target value, the medium target value, or the upper limit target value which are three stages where the coefficient of performance is high with regard to each of the heat source units 50a, 50b, and 50c. As such, it is possible to perform the control for improving efficiency such that the coefficient of performance over the entirety of the heat source system 100 is brought close to the maximum.

### (3-3)

In the present embodiment, the control section 16 controls the load of each of the heat source units 50a, 50b, and 50c including driving and stopping of the heat source units 50a, 50b, and 50c. As such, it is possible to flexibly perform the control for improving efficiency over the entirety of the heat source system which has the plurality of heat source units 50a, 50b, and 50c where the capacities and/or the load characteristics are different.

### (3-4)

In the present embodiment, it is possible for the heat source system control device 10 to more easily and reliably perform the control for improving efficiency such that the coefficient of performance for the entirety of the heat source system is maximized with regard to the total energy consumption of the entirety of the heat source system based on information which relates to the coefficient of performance of each of the heat source units 50a, 50b, and 50c in the heat source system 100 which has the plurality of heat source units 50a, 50b, and 50c where the capacities and/or the load characteristics are different.

### (3-5)

In the present embodiment, it is possible for the heat source system control device 10 to select the optimal heat source units 50a, 50b, and 50c, perform driving or stopping of the heat source units 50a, 50b, and 50c, and perform the control for improving efficiency so as to maximize the coefficient of performance for the entirety of the heat source system 100 based on the rated capacity information of each of the heat source units 50a, 50b, and 50c in a case where it is necessary to carry out controlling by driving or stopping the heat source units in the heat source system 100 which has the plurality of heat source units 50a, 50b, and 50c where the capacities and/or the load characteristics are different.

### (4) Modified Examples

An embodiment of the present invention is described above based on the drawings, but the detailed configuration is not limited to the embodiment described above and modifications are possible within a range which does not depart from the gist of the present invention. Modified examples of the present embodiment are shown below. A plurality of the modified examples may be appropriately combined.

### (4-1) Modified Example A

In the heat source system 100 according to the embodiment described above, a certain amount of hot/cold water is sent from the primary pumps 41a, 41b, and 41c. Here, the heat source system control device 10 may bring the temperature of the hot/cold water, which is aggregated by the first header 20, close to the set temperature by controlling the flow amount of the hot/cold water which is sent from the primary pumps 41a, 41b, and 41c to the heat source units 50a, 50b, and 50c. The control section 16 of the heat source system control device 10 controls the flow amount from the primary pumps 41a, 41b, and 41c via a communication network of a signal line or the like.

Here, the control section 16 controls the load of each of the heat source units 50a, 50b, and 50c. As such, the amount of heat which is output by each of the heat source units 50a, 50b, and 50c is perceived. In the present modified example, the amount of heat which is outputted by the heat source units 50a, 50b, and 50c is kept constant by keeping the load of each of the heat source units 50a, 50b, and 50c constant.

### (4-1-1) Control Process Performed by Heat Source System Control Device in Modified Example A

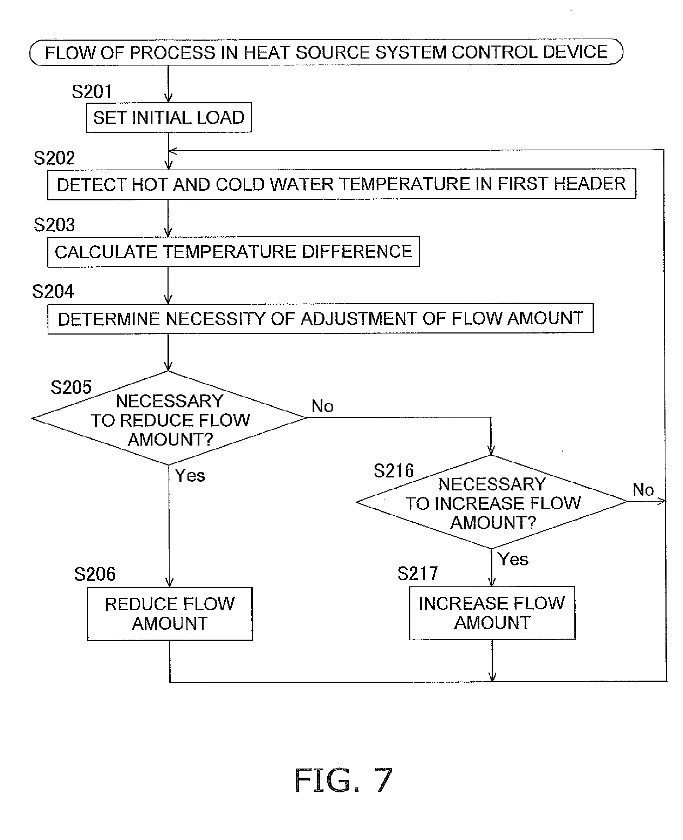

The flow of the process for controlling the heat source system in the heat source system control device 10 in modified example A will be described below using Fig. 7.

First, the initial load setting section 16a performs the initial load setting process in step S201. With regard to the number of the driving heat source units 50a, 50b, and 50c, all of the heat source units 50a, 50b, and 50c are driven in order to bring the temperature of the hot/cold water which is aggregated by the first header 20 close to the set temperature by controlling the flow amount of the hot/cold water.

In step S202, the header temperature detecting section 14 measures the actual measurement temperature. The header temperature detecting section 14 detects output value from the header temperature sensor 60 and stores the values in the memory section 15.

In step S203, the temperature difference calculating section 16b performs the temperature difference calculation process. The control section 16 stores the temperature difference, which is calculated, in the memory section 15.

In step S204, the control section 16 determines that it is necessary to reduce the flow amount of the hot/cold water which is sent to the heat source units 50a, 50b, and 50c (a reduction in flow amount is necessary) in a case where the temperature difference described above is a positive value. In addition, the control section 16 determines that it is necessary to increase the flow amount of the hot/cold water which is sent to the heat source units 50a, 50b, and 50c (an increment in flow amount is necessary) in a case where the temperature difference described above is a negative value.

In step S205, the process transitions to step S206 in a case where it is determined that a reduction in the flow amount is necessary as described above. In other cases, the process transitions to step S216.

In step S206, the control section 16 reduces the flow amount of the hot/cold water, which is sent out to each of the heat source units 50a, 50b, and 50c. It is possible for the control section 16 to reduce the flow amount by controlling the primary pumps 41a, 41b, and 41c. By doing this, the temperature of the hot/cold water which is discharged from each of the heat source units 50a, 50b, and 50c is lowered. In the present modified example, the loads of the heat source units 50a, 50b, and 50c are constant, but it is further possible for the temperature of the hot/cold water to be lowered by increasing the loads of the heat source units 50a, 50b, and 50c. When the process of step S206 is completed, the process returns to step S202.

In step S216, the process transitions to step S217 in a case where it is determined that an increment in the flow amount is necessary in step S204. In other cases, the process returns to step S202.

In step S217, the control section 16 increases the flow amount of the hot/cold water, which is sent out to each of the heat source units 50a, 50b, and 50c. It is possible for the control section 16 to increase the flow amount by controlling the primary pumps 41a, 41b, and 41c. By doing this, the temperature of the hot/cold water which is discharged from each of the heat source units 50a, 50b, and 50c is raised. In the present modified example, the loads of the heat source units 50a, 50b, and 50c are constant, but it is further possible for the temperature of the hot/cold water to be raised by reducing the loads of the heat source units 50a, 50b, and 50c. When the process of step S217 is completed, the process returns to step S202.

### (4-1-2) Characteristics

In the present modified example, the flow amount of the hot/cold water which is supplied to each of the heat source units 50a, 50b, and 50c and the load of each of the heat source units 50a, 50b, and 50c are controlled such that the temperature of the hot/cold water which is aggregated by the first header 20 is brought close to the set temperature. As such, it is possible to more easily perform the control for improving efficiency so as to bring the efficiency of the total energy consumption over the entirety of the heat source system close to the maximum in the heat source system which has the plurality of heat source units 50a, 50b, and 50c where the capacities and/or the load characteristics are different.

### (4-2) Modified Example B

In modified example A, the control section 16 brings the temperature of the hot/cold water which is aggregated by the first header 20 close to the set temperature by controlling the flow amount of the hot/cold water which is sent to each of the heat source units 50a, 50b, and 50c by the primary pumps 41a, 41b, and 41c but modified examples are not limited to this.

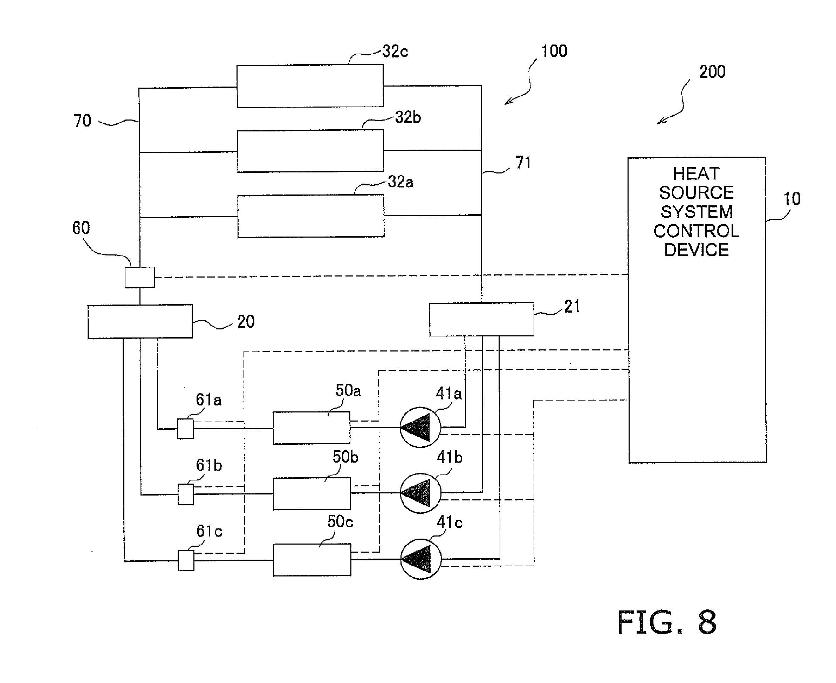

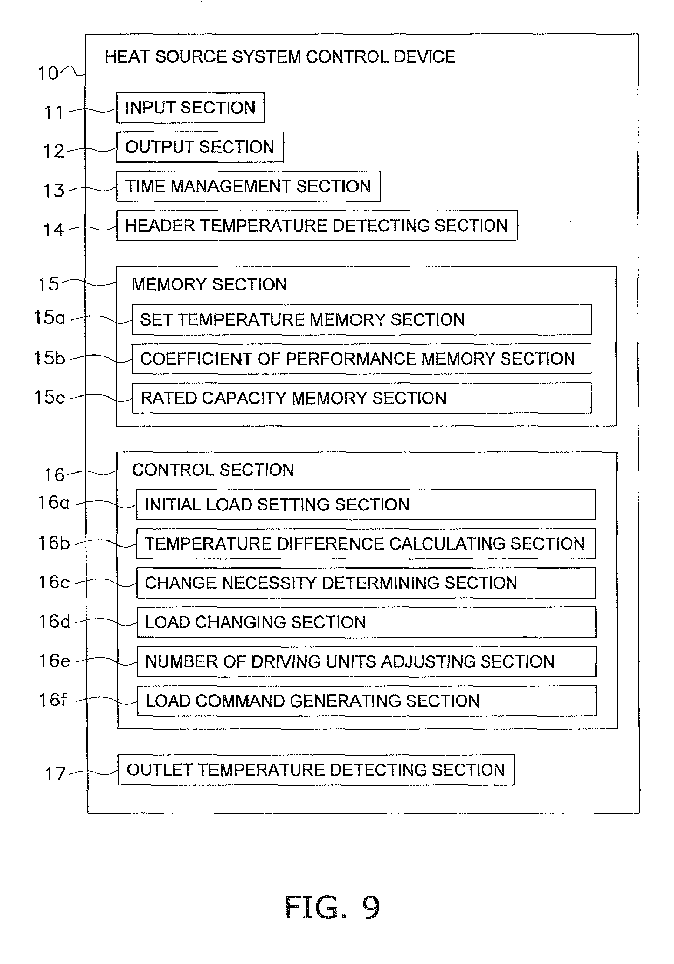

In modified example B, outlet temperature sensors 61a, 61b, and 61c which detect the temperature of the hot/cold water which is discharged from each of the heat source units 50a, 50b, and 50c may be further provided as shown in Fig. 8. The heat source system control device 10 may be further provided with an outlet temperature detecting section 17 as shown in Fig. 9. The outlet temperature detecting section 17 detects output values from the outlet temperature sensors 61a, 61b, and 61c via a communication network such as a signal line.

The heat source system control device 10 controls the load of each of the heat source units 50a, 50b, and 50c and the flow amount of the hot/cold water. It is possible for the control section 16 to perceive the flow amounts of the hot/cold water which are respectively discharged from the heat source units 50a, 50b, and 50c by controlling the primary pumps 41a, 41b, and 41c. In addition, it is possible for the control section 16 to perceive the temperature of the hot/cold water which is discharged from each of the heat source units 50a, 50b, and 50c with the outlet temperature sensors 61a, 61b, and 61c. As such, it is possible to perceive the flow amount of the hot/cold water which is aggregated by the first header 20 and the temperature of the hot/cold water without using the output values from the header temperature sensor 60. Due to this, the control section 16 controls each of the heat source units 50a, 50b, and 50c so as to bring the coefficient of performance of the heat source system 100 close to the maximum by controlling the primary pumps 41a, 41b, and 41c and the loads of the heat source units 50a, 50b, and 50c. Accordingly, the temperature of the hot/cold water which is aggregated by the first header 20 may be brought close to the set temperature.

### (4-2-1) Control Process Performed by Heat Source System Control Device in Modified Example B

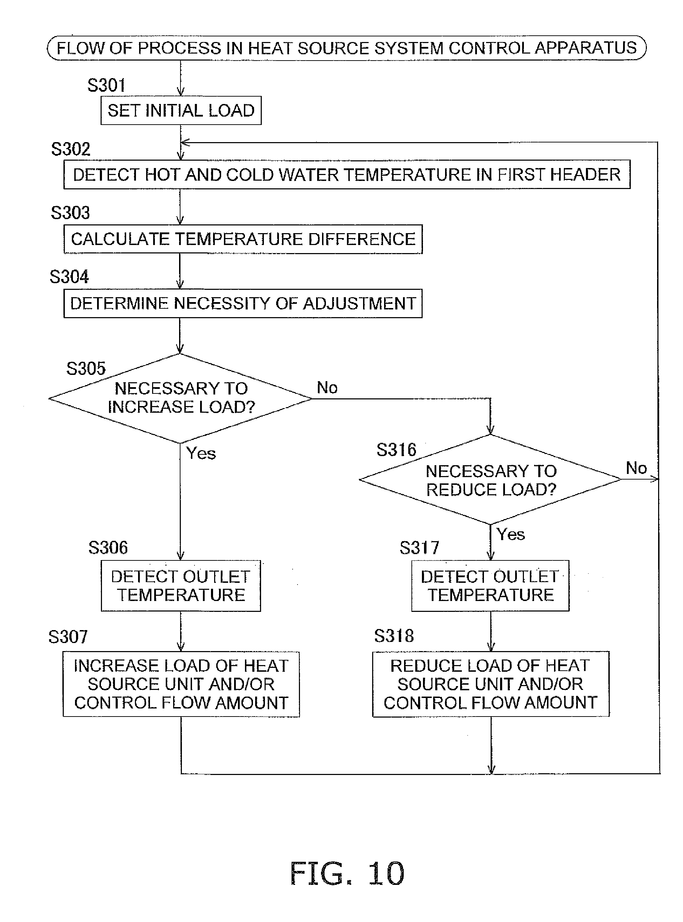

The flow of the process for controlling the heat source system in the heat source system control device 10 in modified example B will be described below using Fig. 10.

First, the initial load setting section 16a performs the initial load setting process in step S301. With regard to the number of the driving heat source units 50a, 50b, and 50c, all of the heat source units 50a, 50b, and 50c are driven in order to bring the temperature of the hot/cold water which is aggregated by the first header 20 close to the set temperature by controlling the flow amount of the hot/cold water and the loads of the heat source units 50a, 50b, and 50c.

In step S302, the header temperature detecting section 14 measures the actual measurement temperature. The header temperature detecting section 14 detects output value from the header temperature sensor 60 and stores the output values in the memory section 15.

In step S303, the temperature difference calculating section 16b performs the temperature difference calculation process. The control section 16 stores the temperature difference, which is calculated, in the memory section 15.

In step S304, the change necessity determining section 16c performs the adjustment necessity determining process. The change necessity determining section 16c performs determining of whether increment of the load is necessary or reduction of the load is necessary in a case where there is a temperature difference as a result of the temperature difference calculation process.

In step S305, the process transitions to step S306 in a case where it is determined that the above mentioned increment of the load is necessary. In other cases, the process transitions to step S316.

In step S306, the outlet temperature detecting section 17 detects the outlet temperatures which are the output values from the respective outlet temperature sensors 61 a, 61b, and 61c. The outlet temperature detecting section 17 stores the outlet temperatures, which are detected, in the memory section 15.

In step S307, the control section 16 determines the outlet temperatures of the respective heat source units 50a, 50b, and 50c and the flow amounts which are discharged from the respective heat source units 50a, 50b, and 50c. The outlet temperatures and the flow amounts described above are determined so that the actual measurement temperature becomes close to the set temperature and the flow amount of the hot/cold water becomes the flow amount of the hot/cold water which is necessary for the heat source system 100. The control section 16 increases the load of each of the heat source units 50a, 50b, and 50c based on the temperature difference between the outlet temperature of each of the heat source units 50a, 50b, and 50c and the outlet temperature of each of the heat source units 50a, 50b, and 50c which is determined by the control section 16 as it is determined in step S304 that increment of the load is necessary. Furthermore, controlling of the flow amounts of the discharged hot/cold water is performed. Then, the control section 16 sets the outlet temperatures to the respective outlet temperatures of the heat source units 50a, 50b, and 50c which are determined by the control section 16. Furthermore, the control section 16 sets the flow amounts to the flow amounts which are discharged respectively from the heat source units 50a, 50b, and 50c described above which are determined by the control section 16. When the process of step S307 is completed, the process returns to step S302.

In step S316, the process transitions to step S317 in a case where it is determined that reduction of the load is necessary as described above. In other cases, the process transitions to step S302.

In step S317, the outlet temperature detecting section 17 detects the outlet temperatures which are the output values from the respective outlet temperature sensors 61a, 61b, and 61c. The outlet temperature detecting section 17 stores the outlet temperatures, which are detected, in the memory section 15.

In step S318, the control section 16 determines the outlet temperatures of the respective heat source units 50a, 50b, and 50c and the flow amounts which are discharged from the respective heat source units 50a, 50b, and 50c. The outlet temperatures and the flow amounts described above are determined so that the actual measurement temperature become close to the set temperature and the flow amount of the hot/cold water becomes the flow amount of the hot/cold water which is necessary for the heat source system 100. The control section 16 reduces the load of each of the heat source units 50a, 50b, and 50c based on the temperature difference between the outlet temperature of each of the heat source units 50a, 50b, and 50c and the outlet temperature of each of the heat source units 50a, 50b, and 50c which is determined by the control section 16 as it is determined in step S304 that reduction of the load is necessary. Furthermore, controlling of the flow amounts of the discharged hot/cold water is performed. Then, the control section 16 sets the outlet temperatures to the respective outlet temperatures of the heat source units 50a, 50b, and 50c which are determined by the control section 16. Furthermore, the control section 16 sets the flow amounts to the flow amounts which are discharged respectively from the heat source units 50a, 50b, and 50c described above which are determined by the control section 16. When the process of step S318 is completed, the process returns to step S302.

### (4-2-2) Characteristics

In the present modified example, the outlet temperature detecting section 17 detects the outlet temperatures of the hot/cold water respectively from the heat source units 50a, 50b, and 50c and the control section 16 controls the flow amounts of the hot/cold water of the respective heat source units 50a, 50b, and 50c. As such, the control section 16 controls the load and the flow amount of the hot/cold water in each of the heat source units 50a, 50b, and 50c based on the outlet temperature and the flow amount of the hot/cold water in each of the heat source units 50a, 50b, and 50c. As such, it is possible to more easily and reliably control the temperature and the flow amount of the hot/cold water in the first header 20. In addition, it is possible to perform the control for improving efficiency with regard to the heat source system such that the coefficient of performance of the entirety of the heat source system 100 becomes close to the maximum.

### INDUSTRIAL APPLICABILITY

It is possible to apply the present invention to a heat source system which has a plurality of heat source units and a header which aggregates hot/cold water which is supplied from heat source units.

### REFERENCE SIGNS LIST

- 10: HEAT SOURCE SYSTEM CONTROL DEVICE
- 20: FIRST HEADER (HEADER)
- 21: SECOND HEADER
- 32a: FIRST AIR CONDITIONER
- 32b: SECOND AIR CONDITIONER
- 32c: THIRD AIR CONDITIONER
- 41a: FIRST PRIMARY PUMP
- 41b: SECOND PRIMARY PUMP
- 41c: THIRD PRIMARY PUMP
- 50a: FIRST HEAT SOURCE UNIT
- 50b: SECOND HEAT SOURCE UNIT
- 50c: THIRD HEAT SOURCE UNIT
- 60: HEADER TEMPERATURE SENSOR
- 70: UPSTREAM SIDE PIPE
- 71: DOWNSTREAM SIDE PIPE
- 100: HEAT SOURCE SYSTEM
- 200: ENERGY MANAGEMENT SYSTEM

### CITATION LIST

### PATENT LITERATURE

Patent Literature 1: Japanese Unexamined Patent Application Publication No. 2005-114295

## Claims

1. A heat source system control device (10) which controls a heat source system (100) and has a plurality of heat source units (50a, 50b, and 50c) where capacities and/or load characteristics are different, a header (20) which aggregates hot/cold water which is supplied from the plurality of heat source units, and a header temperature sensor (60) which measures the temperature of hot/cold water which is aggregated by the header, the heat source system control device comprising:
a set temperature memory section (15a) storing a set temperature of the hot/cold water in the header;
a header temperature detecting section (14) detecting output values from the header temperature sensor; and
a control section (16) performing a control for improving efficiency of the plurality of heat source units based on the respective capacities and/or load characteristics and bringing the temperature of the hot/cold water close to the set temperature.

2. The heat source system control device according to claim 1, wherein
the control section performs at least one of an individual control of driving and stopping of each of the plurality of heat source units and an individual control of the load of each of the plurality of heat source units.

3. The heat source system control device according to claim 1 or claim 2, further comprising:
a coefficient of performance memory section (15b) storing information, which relates to a coefficient of performance according to the load of each of the plurality of heat source units, as coefficient of performance information,
wherein
the control section references the coefficient of performance information stored in the coefficient of performance memory section and drives each of the plurality of heat source units with the load where the coefficient of performance is high.

4. The heat source system control device according to any one of claims 1 to 3, further comprising:
a rated capacity memory section (15c) storing information, which relates to a rated capacity of each of the plurality of heat source units, as rated capacity information,
wherein
the control section determines the heat source units which are driven or stopped based on the rated capacity information stored in the rated capacity memory section.

5. The heat source system control device according to any one of claims 1 to 4, wherein
the heat source system further has a plurality of pumps (41 a, 41b, and 41c) which supply the hot/cold water to each of the plurality of heat source units,
the control section adjusts the temperature of the hot/cold water which is aggregated by the header by controlling a flow amount of the hot/cold water supplied from the plurality of pumps.

6. The heat source system control device according to claim 5, wherein
the heat source system further has a plurality of outlet temperature sensors (61 a, 61, and 61c) which are arranged in the vicinity of respective outlets of the plurality of heat source units and measure outlet temperatures which are the temperatures of the hot/cold water which is supplied to the header,
an outlet temperature detecting section (17), which detects output values from the plurality of outlet temperature sensors, is further provided, and
the control section adjusts the temperature of the hot/cold water in the header by controlling the load of each of the plurality of heat source units and the flow amount of the hot/cold water which is supplied from the plurality of pumps based on the outlet temperature of each of the plurality of heat source units and the flow amount of the hot/cold water which is supplied from each of the plurality of heat source units.
